# EUROPEAN PATENT APPLICATION

(11) **EP 4 343 275 A1**
(43) Date of publication of application: **27.03.2024**
(21) Application number: 22196881.1
(22) Date of filing: 21.09.2022
(51) Int. Cl.: G01B 11/10, A24C 5/34

(54) **A METHOD AND SYSTEM FOR MEASURING A DIAMETER OF A CONTINUOUS ROD OF TOBACCO INDUSTRY PRODUCTS**

(71) Applicant: International Tobacco Machinery Poland Sp. z o.o., 26-600 Radom (PL)
(72) Inventor: HOFFMANN, Hans-Reiner, 41516 Grevenbroich (DE)
(74) Representative: Markieta, Jaroslaw Franciszek

(57) **Abstract**

A method for measuring a diameter of a continuous rod of the tobacco industry product characterized in that it comprises steps of calculating the diameter of the continuous rod on basis of signal of the first sensor using a characteristics where diameter is related to a value of the signal produced by the first sensor, calculating the diameter of the continuous rod on basis of the signal produced by the second sensor, where diameter is related to the signal of the second sensor, comparing the diameter measured by the first sensor and the diameter measured by the second sensor, and altering the characteristics of the first sensor in case the measured diameter by the first sensor is different from the diameter of the same point on the continuous rod measured by the second sensor such that value of the signal produced by the first sensor is related to the diameter measured by the second sensor.

## Description

The object of the present invention is a method and system for measuring a diameter of a continuous rod of tobacco industry product.

In the state of the art there are known methods of measurement of the diameter of the rod like articles with a use of the optical systems.

The patent application US2006109485A1 discloses a system for measuring a diameter of the rod shape object of the tobacco industry with a use of light beams. The method disclosed is based on the concept that the rod-shaped article is illuminated by all the light sources at one point at the same time so that light is scattered from the surface of the article at the illuminated point and the scattered light is detected by sensors. One sensor is hereby respectively assigned to one light source so that the profile of a partial surface of the entire circumferential surface of the article illuminated by a light source is determined by one sensor. In order to be able to determine the diameter at a predetermined point of the article at the same time and without shade areas, it is necessary for several light sources to illuminate the article at this point. A rapid and reliable determination of the diameter of the article is thus ensured. Furthermore, several light sources are necessary in order to cover the article completely, i.e., without shading or the like.

The problem present in the tobacco industry when performing an optical measurements is allocation of the dust on the working surface of the sensors which impers the measurements over time.

It has been noticed that the sensors with a higher accuracy are less prone to the accumulation of dust, however they usually are not fast enough to be placed in a control loop if the aim is to control endless rod shape article with a frequency high enough for controlling a diameter each and every rod-shape article cut from the endless rod in the next steps of manufacturing process.

According to the invention fast but less reliable and more prone to dust collection sensors are used in the control loop to get measurements with a high enough frequency, and the accurate

A method for measuring a diameter of a continuous rod of the tobacco industry product comprising steps of transferring a continuous rod via a sensor unit comprising a first sensor and a second sensor, the first sensor being an analogue sensor, the second sensor being an analogue sensor, frequency of operation of the first sensor is higher than frequency of operation of the second sensor, calculating a diameter of the transferred continuous rod by means of a computing unit which receives signals from the first and second sensor.

Method according to the invention comprises a **further steps of** calculating the diameter of the continuous rod on basis of signal of the first sensor using a characteristics where diameter is related to a value of the signal produced by the first sensor, calculating the diameter of the continuous rod on basis of the signal produced by the second sensor, where diameter is related to a signal of the second sensor, comparing the diameter measured by the first sensor and the diameter measured by the second sensor, and altering the characteristics of the first sensor in case the measured diameter by the first sensor is different from the diameter of the same point on the continuous rod measured by the second sensor such that value of the signal produced by the first sensor is related to the diameter measured by the second sensor.

The method according to the invention wherein the first frequency is in a range from 20kHz to 200kHz, preferably 100kHz.

The method according to the invention wherein the second frequency is in a range of 0.5kHz to 3kHz, preferably 1kHz.

The method according to the invention wherein the endless rod of tobacco industry products is an endless rod of multi-segment rod-shaped tobacco industry products, and the first frequency is selected in relation to the speed to obtain at least one sample of the first accuracy per segment, and the second frequency is selected to obtain at least one sample of the second accuracy per multi-segment tobacco industry product.

The method according to the invention wherein the altering of the characteristics of the first sensor is performed with an correcting frequency smaller than the second frequency.

The method according to the invention wherein the correcting frequency is in a range from 0.001Hz to 10Hz, preferably at 0.1 Hz.

The method according to the invention wherein the light before reaching the sensor of the type is split into two beams with a beam splitter, and one of the beams reach the sensor of the first type, while the other reached the sensor of the second type.

A measuring system for measuring a diameter of a continuous rod of the tobacco industry comprising a sensor unit comprising a first sensor and a second sensor, the first sensor being an analogue sensor, the second sensor being an analogue sensor, frequency of operation of the first sensor is higher than frequency of operation of the second sensor, a computing unit arranged to receive signals from the first sensor and the second sensor and calculate a diameter of the continuous rod. The system according to the invention comprises the computing unit is arranged to calculate the diameter of the continuous rod on basis of signal of the first sensor using a characteristics where calculated diameter is related to a value of signal produced by the first sensor, and to calculate the diameter of the continuous rod on basis of signal produced by the second sensor, where diameter is related to signal from the second sensor, and the computing unit is arranged to alter the characteristics of the first sensor in case the measured diameter by the first sensor is different from the diameter of the same point on the continuous rod measured by the second sensor such that value of the signal produced by the first sensor is related to the diameter measured by the second sensor.

The system according to the invention wherein the sensor unit is comprising a set of three individual sensors of the first type each covering 120° of the diameter arc.

The system according to the invention wherein the sensor unit is comprising a set of six individual sensors of the first type each covering 60° of the diameter arc.

The system according to the invention wherein the sensor unit is comprising one, two or three sensors of the second type.

The new proposed method and system for measuring a diameter of a continuous rod of the tobacco industry product is capable of maintaining the measurement accuracy at the designed level in a an environment of dust heavy factory floor at a high frequency of measurements.

The invention is described below in detail in preferred embodiments in relations to the figures:
- Fig. 1: shows a measurement setup used in the method according to the invention;
- Fig. 2: a schematic representation of the measurement principle according to the invention;
- Fig. 3: a schematic representation of the measurement principle according to the invention where three sensors are used;
- Fig. 4: an isometric view of a measurement system according to the invention;

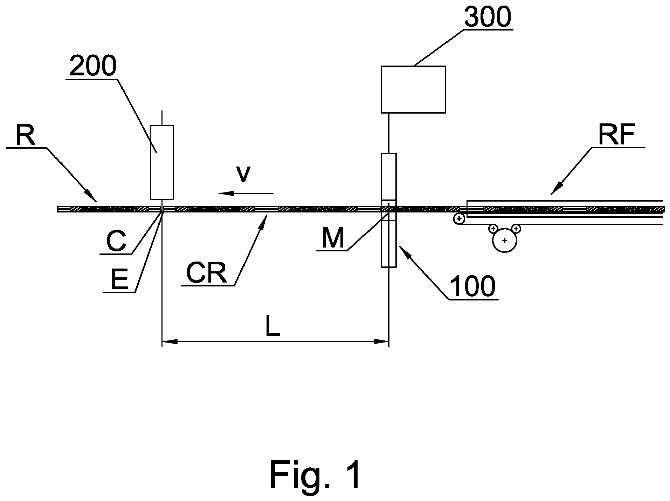

Fig. 1 shows a measurement setup used in the method according to the invention. The measurement setup further explained in relation to fig. 5 comprises a measurement unit 100, cutting unit 200, and computerized data logging unit 300. The measurement setup comprises senor unit with two sensors 10, 11 and a light source **S.** The measurement unit **100** runs measurement in a measurement point **M** that is in a distance **L** from a cutting point **C,** where the cutting unit **200** cuts rod-like article 1 in a form of an endless rod of tobacco industry products **R.** An endless or continuous rod **CR** of tobacco industry products travels with a speed v in a direction from the measurement point **M** towards the cutting point **C.**

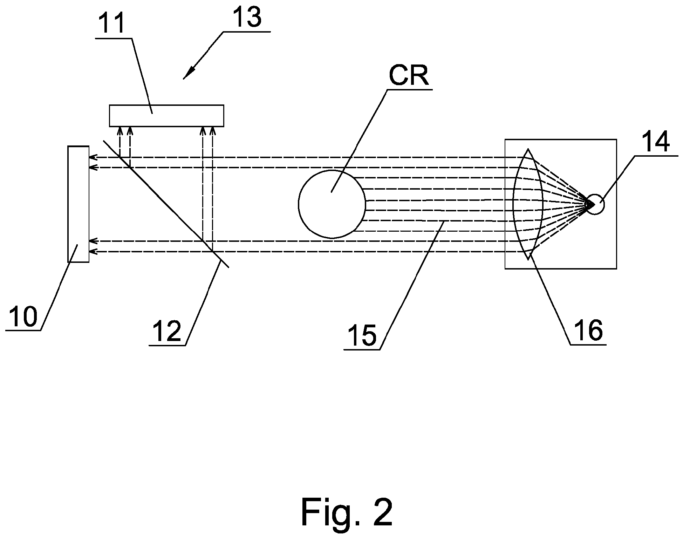

Fig. 2 is a schematic representation of the measurement principle according to the invention. A light source **S** emits a collimated beam of light **15** of a selected wavelength. The light source maybe a laser light source emitting visible light or infrared light. The beam of light is directed by the optical unit **16** towards the rod-like article **1** in the measuring direction. The width of light beam **15** is selected so it is bigger than a diameter of the measured object, so the light beam **15** reaches the first sensor **10** above and below the measured object i.e. rod-like article **1.** Before reaching the first sensor **10** the light beam is split by the half-transmitting mirror **12** so the light beam reaches also the second sensor **11.**

In the preferred embodiment a method for measuring a diameter of a continuous rod of the tobacco industry product as rod-like article **1** comprising steps of transferring a continuous rod via a sensor unit comprising a first sensor **10** and a second sensor **11.** The first and second sensor being an analogue sensors, while in other embodiments the digital sensors can be used. A first frequency of operation of the first sensor **10** is higher than a second frequency of operation of the second sensor **11.** In the next step calculating a diameter of the transferred continuous rod **1** by means of a computing unit which receives signals from the first sensor **10** and the second sensor **11.** In the preferred embodiment calculating the diameter of the continuous rod 1 on basis of a signal of the first sensor **10** using a characteristics where diameter is related to a value of the signal produced by the first sensor **10.**

The characteristics of the sensor is a function that describes how the measured physical property is translated into analog electrical signal i.e. voltage on the out put of the sensor and how this electrical signal is translated into measured value i.e. a diameter of the rod-like article **1.** There at least two ways of changing sensor characteristics either on analog side by modification of the analog voltage or later on the digital side where the diameter is already measured in a form of digital correction.

Next step of the method is calculating the diameter of the continuous rod on basis of a signal produced by the second sensor, where diameter is related to the signal produced by the second sensor, and comparing the diameter measured by the first sensor and the diameter measured by the second sensor. In the preferred embodiment in the next step comprises altering the characteristics of the first sensor **10** in case the measured diameter by the first sensor is different from the diameter of the same point on the continuous rod measured by the second sensor **11** such that value of the signal produced by the first sensor **10** is related to the diameter measured by the second sensor **11.**

The first frequency is in a range from 20kHz to 200kHz, preferably 100kHz. While the second frequency is in a range of 0.5kHz to 3kHz, preferably 1kHz.

In another preferred embodiment the endless rod of tobacco industry products **1** is an endless rod of multi-segment rod-shaped tobacco industry products, and the first frequency is selected in relation to the speed (v) to obtain at least one sample of the first accuracy per segment, and the second frequency is selected to obtain at least one sample of the second accuracy per multi-segment tobacco industry product.

In yet another embodiment the altering of the characteristics of the first sensor is performed with an correcting frequency smaller than the second frequency. While the correcting frequency is in a range from 0.001Hz to 10Hz, preferably at 0.1 Hz.

In the preferred embodiment the light beam before reaching the sensor of the type is split into two beams with a beam splitter **12,** and one of the beams reach the first sensor **10,** while the other reached the second sensor **11.**

In a preferred embodiment a measuring system for measuring a diameter of a continuous rod of the tobacco industry is comprising a sensor unit comprising a first sensor **10** and a second sensor **11,** the first sensor being an analogue sensor, the second sensor being an analogue sensor, frequency of operation of the first sensor **10** is higher than frequency of operation of the second sensor **11.** System is further comprising a computing unit arranged to receive signals from the first sensor and the second sensor and calculate a diameter of the continuous rod. The computing unit is arranged to calculate the diameter of the continuous rod on basis of signal of the first sensor **10** using a characteristics where calculated diameter is related to a value of signal produced by the first sensor. The computing unit is arranged to calculate the diameter of the continuous rod on basis of signal produced by the second sensor **11,** where the diameter is related to the signal produced by the second sensor **11.** The computing unit is arranged to alter the characteristics of the first sensor **10** in case the measured diameter by the first sensor **10** is different from the diameter of the same point on the continuous rod measured by the second sensor **11** such that value of the signal produced by the first sensor **10** is related to the diameter measured by the second sensor **11.**

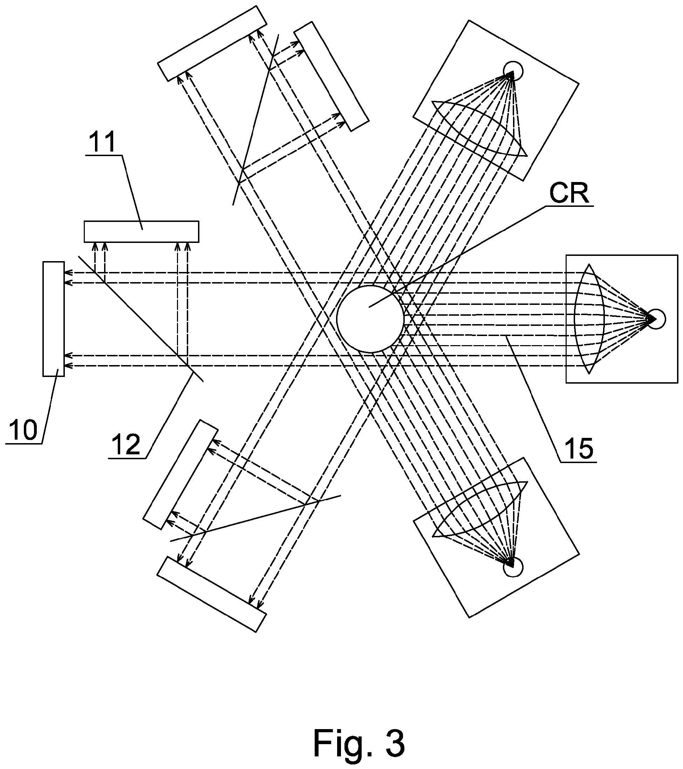

In yet another preferred embodiment presented on Fig. 3 the sensor unit is comprising a set of three pairs of first sensors 10 and second sensors 11 while each pair is covering 120° of the diameter arc.

In alternative embodiment sensor unit is comprising a set of six individual first sensors of each covering 60° of the diameter arc.

In yet another alternative embodiments sensor unit is comprising one, two or three second sensors 11.

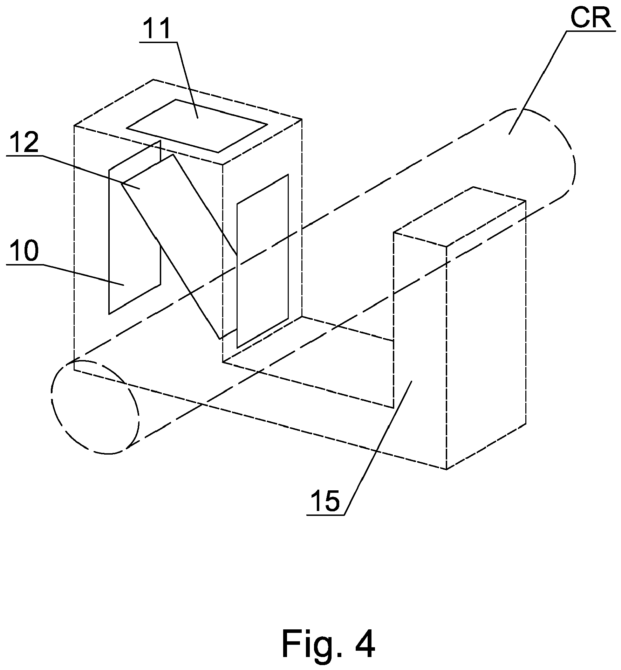

Fig. 4 shows an isometric view of a measurement system according to the preferred embodiment, the special relationships are more clearly visible.

## Claims

1. A method for measuring a diameter of a continuous rod of tobacco industry products **(1)** comprising steps of
transferring a continuous rod via a sensor unit comprising a first sensor **(10)** and a second sensor **(11),** the first sensor **(10)** being an analogue sensor, the second sensor **(11)** being an analogue sensor, frequency of operation of the first sensor **(10)** is higher than frequency of operation of the second sensor **(11),**
calculating a diameter of the transferred continuous rod by means of a computing unit which receives signals from the first and second sensors **(10, 11),**
**characterized by further steps of**
calculating the diameter of the continuous rod (1) on basis of a signal of the first sensor **(10)** using a characteristics where diameter is related to a value of the signal produced by the first sensor **(10),**
calculating the diameter of the continuous rod on basis of a signal produced by the second sensor **(11),** where diameter is related to a signal produced by the second sensor **(11),**
comparing the diameter measured by the first sensor **(10)** and the diameter measured by the second sensor **(11),** and
altering the characteristics of the first sensor **(10)** in case the measured diameter by the first sensor **(10)** is different from the diameter of the same point on the continuous rod measured by the second sensor **(11)** such that value of the signal produced by the first sensor **(10)** is related to the diameter measured by the second sensor **(11).**

2. The method according to claim 1 wherein the first frequency of the first sensor **(10)** is in a range from 20kHz to 200kHz, preferably 100kHz.

3. The method according to claims 1 or 2 wherein the second frequency of the second sensor **(11)** is in a range of 0.5kHz to 3kHz, preferably 1kHz.

4. The method according to any of claims 1 to 3 wherein the endless rod of tobacco industry products is a continuous rod of multi-segment rod-shaped tobacco industry products, and the first frequency is selected in relation to the speed (v) to obtain at least one sample of the first accuracy per segment, and the second frequency is selected to obtain at least one sample of the second accuracy per multi-segment tobacco industry product.

5. The method according to any of the claims 1 to 4 wherein the altering of the characteristics of the first sensor is performed with a correcting frequency smaller than the second frequency.

6. . The method according to the claim 5 wherein the correcting frequency is in a range from 0.001Hz to 10Hz, preferably at 0.1 Hz.

7. The method according to any of claims 1 to 6 wherein the light before reaching the sensor of the type is split into two beams with a beam splitter, and one of the beams reach the sensor of the first type, while the other reached the sensor of the second type.

8. A measuring system for measuring a diameter of a continuous rod of the tobacco industry comprising
a sensor unit comprising a first sensor and a second sensor, the first sensor being an analogue sensor, the second sensor being an analogue sensor, frequency of operation of the first sensor is higher than frequency of operation of the second sensor,
a computing unit arranged to receive signals from the first sensor and the second sensor and calculate a diameter of the continuous rod,
**characterized in that**
the computing unit is arranged to calculate the diameter of the continuous rod on basis of signal of the first sensor using a characteristics where calculated diameter is related to a value of signal produced by the first sensor,
and to calculate the diameter of the continuous rod on basis of signal produced by the second sensor, where diameter is related to a signal from the second sensor, and
the computing unit is arranged to alter the characteristics of the first sensor in case the measured diameter by the first sensor is different from the diameter of the same point on the continuous rod measured by the second sensor such that value of the signal produced by the first sensor is related to the diameter measured by the second sensor.

9. The system according to claim 8 wherein the sensor unit is comprising a set of three individual pairs of sensors **(10, 11)** of the first type each covering 120° of the diameter arc.

10. The system according to claim 8 or 9 wherein the sensor unit is comprising a set of six individual first sensors **(10)** each covering 60° of the diameter arc.

11. The system according to any of claims 8 to 10 wherein the sensor unit is comprising one, two or three second sensors **(11).**
